# EUROPEAN PATENT APPLICATION

(11) **EP 4 353 634 A1**
(43) Date of publication of application: **17.04.2024**
(21) Application number: 23203501.4
(22) Date of filing: 13.10.2023
(51) Int. Cl.: B65G 1/137, B65G 47/91

(54) **COMMISSIONING SYSTEM AND VEHICLE FOR PICKING UP ARTICLES**

(30) Priority: 13.10.2022 IT 202200021105
(71) Applicant: Picklap S.r.l., 41043 Formigine (MO) (IT)
(72) Inventor: DAVOLIO, Maurizio, 41058 Vignola (MO) (IT); CORTESI, Dario, 41056 Savignano Sul Panaro (MO) (IT)
(74) Representative: Provvisionato, Paolo

(57) **Abstract**

A commissioning system allows articles to be picked from storage supports of the pallet type and to be organized on a commissioning support. The system comprises a plurality of compartments which face each other beside at least one lane and which are provided in order to receive respective storage supports of the pallet type for stored articles. The system also comprises at least one commissioning vehicle which is provided to transport at least one commissioning support of the pallet type. The vehicle can move along the lane in order to pick a selection of articles by means of a picking apparatus which is configured to position on the commissioning support the articles which are picked, organizing them in order to form an ordered and stacked grouping.

## Description

### Field of the invention

The present invention relates to the field of logistics and particularly commissioning of articles or products which are stored on storage supports of the pallet type.

The term "pallet" or "pallet type" below is intended to be understood to indicate both pallets of the conventional type, which are constituted by a platform for supporting articles, and pallets of the "roll" type, and supports in the form of cages, or other compatible types.

The invention has been developed with particular regard for a commissioning system and vehicle which are configured to pick articles from storage supports of the pallet type and to organize them on a commissioning support of the pallet type.

### Technological background

In the field of logistics, it is known to store in a store articles which are dispatched in great quantities by various suppliers. The articles can be both individual products or groups of articles which are packed in boxes, bundles or packs. Normally, the suppliers despatch their own articles which are stacked on pallets of homogeneous articles. The stored articles are subsequently picked in the quantities required by the different clients and transported to destinations. Very often, with a single order, the clients order a variety of articles, in quantities which are relatively modest, if not even in single units. In order to reduce the costs and to make the transport operations efficient, therefore, in the field of logistics attempts are being made to optimize the grouping of the articles of one order. This involves picking and stacking or piling the articles on the pallet of the order in an orderly manner.

There exist a number of known types of systems, methods and machines which have the main objective of speeding up the operations for removing the articles from the store (so-called "picking") and grouping them for subsequent transport to destinations so as to efficiently control the orders of the clients (so-called "commissioning"). The majority of known systems provides for individually separating the articles by separating them when they arrive at the store in a state stacked on the pallets of the suppliers. The separated articles are then picked, stored and grouped in accordance with the orders of the clients. Known examples of machines and plants of this type are the ones produced by the American company Dematic Corp. and the German company Witron Logistik + Informatik GmbH.

The above-mentioned systems of known type are very complex and expensive and are used profitably only in the case of very intense logistics. There exist many situations involving commissioning with smaller volumes or types of products in which these systems which are extremely automated and particularly rigid are not suitable. In these situations, the activities of logistics are often carried out manually by operators who walk round with loading trucks between the lanes where the pallets of products despatched by the suppliers are deposited in order to manually pick the products of an order and to stack them on a pallet while seeking to construct a consignment pallet which is relatively stable and ordered. Manual control of the orders is slow and subject to errors. Furthermore, it involves the laborious activity of the operators who have to pick each product and to place it one at a time on the truck. These manual activities require a high number of operators and are therefore expensive and difficult to manage; furthermore, they can be the cause of accidents at work.

Another problem of the systems of the prior art is connected with the optimization of the systems in the light of the various software components which control it. Typically, in the systems of the prior art they can generate conflicts between the optimization of the allocation of the articles to the commissioning pile or stack with respect to the optimization of the paths for picking the articles from the various pallets which are distributed in the store. For example, a software component which is dedicated to the "best fitting" of the articles on the commissioning pallet, that is to say, the allocation pallet, could indicate to the software component which controls the allocation strategies of the products in accordance with elements of the registry database to move the pallet which is mounted on-board the vehicle in an unproductive manner for the overall system. In the same manner, this last software component could indicate unproductive movements to the software component which controls the paths of the fleet of vehicles which operate in the store.

Therefore, there arises the need to find a commissioning solution which can be used in the situations in which it is not possible or advantageous to use the complex automated systems of the prior art in such a manner as to reduce if not completely eliminate the use of operators for manual loading of the articles from pallets.

### Statement of invention

An object of the present invention is to solve the problems of the prior art by providing a commissioning system which is simple, relatively economical and flexible as well as reliable with low risks of plant shutdowns, and which can integrate direct picking from storage supports of the pallet type, on which there are arranged homogeneous articles which are received from the suppliers, in order to form commissioning supports, that is to say, consignment pallets, which comprise orderly groupings, which are virtually always stacked, of articles which are selected on the basis of an order and substantially ready to be packaged and despatched.

Another object is to solve the problems relating to potential conflicts between the various software components which are each dedicated to the control and optimization of a macro-function within the overall management of the commissioning of articles and generally all the decision-related situations involving possible conflicts between the system control software, so as to make the system generally productive. In order to achieve these objects, the invention relates to a commissioning system and a commissioning vehicle as defined in the appended claims.

According to a first aspect, there is described a commissioning system which comprises in general terms a plurality of compartments which are intended as predefined zones, for example, inside a store in which there can be positioned storage supports of the pallet type on which the stored articles are arranged. The storage supports of the pallet type can be advantageously the same pallets which originate directly from the various suppliers. In this manner, it is not necessary to extract the individual articles from the pallets with separation operations of the systems of the prior art in order to arrange them, for example, on shelves in the store. The storage supports of the pallet type which originate from the various suppliers are preferably supported on the ground, each one in the region of a compartment, but may also be allocated to shelves with other pallets alongside and where applicable above them, for example, with ledges and mezzanines being installed for movement.

The compartments may be actual housings, which are preferably closed laterally by barriers, grids, walls or other protection structures which have the function of preventing the piled articles from falling sideways. In any case, each compartment comprises a show portion which opens at least on one lane of the store.

There can circulate along the lane one or more commissioning vehicles which are provided to transport at least one commissioning support of the pallet type, for example, a pallet of the conventional type or of the "roll" type, or cage type or generally any support able to contain articles or products for transport. The commissioning vehicle is provided with an article picking apparatus which is configured so as to selectively pick, that is to say, in accordance with a predefined selection, predetermined articles which are stored on the storage supports. The picking apparatus which is mounted on the commissioning vehicle may extend in order to approach through the show portion of the compartments the articles stored on the storage supports.

The commissioning vehicle is configured to move along at least one lane of the store by means of a manual or automatic guide, or with a combination of both. The commissioning vehicle is further configured to stop in the region of selected compartments in order to pick from the storage supports, via the picking apparatus, a selection of articles in accordance with a given order. The articles which are picked in this manner are gradually positioned on the commissioning support on-board the vehicle so as to from an ordered and piled grouping. In this manner, there becomes formed on the vehicle a support of the pallet type on which there are arranged in a stacked manner the articles corresponding to an order or part of an order, in a state substantially ready for being packed and despatched.

According to a particular aspect, the commissioning vehicle may be provided with a recognition apparatus for the show portions of the compartments and is suitable for being positioned precisely in the region of each show portion so as to readily and safely pick the selected articles from each storage support. Preferably, the recognition apparatus which is mounted on-board the commissioning vehicle may comprise a vision and/or scanning device which is capable of defining one or more positioning references which are arranged on the compartment or near it. The vehicle can thus manoeuvre in order to be positioned exactly in front of the show portion of the compartment in accordance with positioning signals which are processed on the basis of the data which are received from the vision and/or scanning device. The correct positioning in front of the show portion of the compartment allows correct picking from the pallet received in the compartment of the article or the articles necessary for fulfilling the order which is being formed on the pallet on-board the vehicle. Furthermore, the precise positioning in front of the compartment allows the spaces of the adjacent compartments to be left free so that any other commissioning vehicles can readily approach this location in order to carry out other article loading operations in a parallel manner.

Preferably, the storage supports of the pallet type may all have at least one standard, uniform dimension which is, for example, compatible with the dimensions of the pallets according to the European standard. The show portion of the compartments on the at least one lane may have a predetermined and uniform show width which is slightly greater than the standard, uniform dimension of the storage supports of the pallet type. The term "slightly greater than" is intended to be understood to mean a dimension which readily allows the insertion of the storage supports of the pallet type in the respective compartments by means of a substantially transverse movement with respect to the extent of the lane with means of the generally known type, for example, a transporter or other similar means which are used in the field of movement of storage supports of the pallet type. In particular, the predetermined show width has such a dimension as to allow a standard pallet charged with articles to be readily inserted into the compartment, but leaving a small space at the side and rear of the pallet inside the compartment in order to optimize the spaces in the store. Preferably, some or all of the compartments can be provided with barriers, walls, grids or other containment or protection structures along all or some of the extent of the perimeter thereof which is not affected by the show portion. In this manner, taking into account the fact that the dimensions from above of the compartments are preferably slightly greater than those of the pallet with the stored articles, it is possible to prevent the articles from falling sideways, particularly when they are automatically picked by the picking apparatus of the commissioning vehicle.

According to another aspect, there may be provided in the commissioning system a storage area for empty commissioning supports of the pallet type to be loaded on the commissioning vehicles which are directed to the various compartments in order to be charged at that location the various articles in accordance with a specific order. In the commissioning system, it is possible to provide an automatic loading apparatus which is provided to selectively load one of these commissioning supports from the support storage area on a commissioning vehicle.

According to another aspect, the commissioning system may be configured in a store so as to comprise a plurality of lanes towards which there face the various compartments which may contain the storage supports of the pallet type, on which the articles which are from the various suppliers and which are gradually picked in order to form the commissioning supports in accordance with specific orders are collected and/or stacked. The various lanes, which are formed and connected to each other in various manners according to generally known store layouts, can be travelled by a large number of commissioning vehicles which can circulate simultaneously in the store. Each vehicle may be provided so as to autonomously pick a corresponding selection of articles in accordance with a corresponding order. The automatic picking may be integrated in the manual picking of a number of selected articles, wherein the characteristics, for example, the shape, dimensions, weight or fragility thereof, are not compatible with the automated picking by the automatic loading apparatus of the vehicle. A control system of the type implemented on a computer, such as, for example, a central server, a cluster of servers, a distributed server, a remote server or other hardware configurations of the generally known type, may be programmed so as to coordinate the movements of the commissioning vehicles along the lanes, preferably by optimizing the respective stopping thereof in the region of the compartments in which the stored articles to be picked in an orderly manner are received. The control system may advantageously prevent occurrences of gridlock, deceleration or collision between commissioning vehicles and may be provided also to organize the picking sequence in accordance with the characteristics of the various articles, for example, by directing the commissioning vehicle initially to charge bulky or heavy articles, which are intended to be arranged in a lower position on the pallet on-board the vehicle, in order to finish with the lighter, small or fragile articles, which are intended to be arranged in a higher position on the pallet.

According to a particular aspect, the control system may be programmed in order to simulate temporally defined activity cycles, for example, daily cycles, which fulfil a specific number of orders. In this manner, it is possible to determine beforehand, for example, the number of commissioning vehicles to be used during each activity cycle on the basis of the stored articles to be picked and the times for moving and stopping the commissioning vehicles. At locations where there is provision or a need for manual intervention for loading a number of articles, the simulation also allows as many operators as are necessary to be provided in order to fulfil the hypothesized orders.

According to a particular aspect, the control system carried out on a computer may comprise a plurality of control software components, each one being provided for controlling a commissioning macro-function. The software components may be selected from the components of the group which comprises at least one software component for controlling the allocation of the articles, a software component for controlling the paths of the fleet of commissioning vehicles and a software component which controls the positioning of the articles on the commissioning support of the pallet type which is transported by the commissioning vehicle. The control system may further advantageously comprise an artificial intelligence software component which is provided so as to interact with the plurality of above-mentioned control software components. In particular, the artificial intelligence software component may be implemented in the control system so as to send to the other software components indications which are useful for carrying out actions as a priority from one or the other control software component in accordance with commissioning objectives which are generally predetermined. In this manner, the optimization of the operations is managed at an overall level by the artificial intelligence software component, the indications of which can predominate over the individual strategies for optimization of specific macro-functions which are determined by each of the other control software components which are subject to the supervision of the artificial intelligence software component.

According to a different aspect, there is described a commissioning vehicle which can advantageously be used in the commissioning system of the type mentioned above. A receiving zone is provided in the commissioning vehicle with a support base for at least one commissioning support of the pallet type. The support may be initially transferred onto the vehicle by taking it, for example, automatically, from a store of empty pallets, to which the vehicle is directed. There is further provided on the vehicle an article picking apparatus which is configured to selectively and sequentially pick a specific number of articles. The picking apparatus is capable of picking the articles from predetermined storage supports of the pallet type which are arranged externally with respect to the vehicle. The picking apparatus is further capable of positioning the articles picked in an orderly manner in the receiving zone on-board the vehicle. In particular, the articles can be arranged so as to form a coherent series of stable piles so as to generally form a commissioning pallet ready for being packed and subsequently despatched to its destination. In particular, the picking apparatus comprises a gripping member which is configured to take each article at the side rather than from above as in robotized systems of the prior art. The article picking apparatus may comprise at least one articulated arm which can move in space and which is provided at the end thereof with the gripping member, which preferably comprises an assembly of suction cups. The cups may be arranged to be spatially aligned in a plane or may be arranged in a main direction, for example, in a horizontal manner. The cups may be fixed or may be movable in a transverse direction so as to be adapted to lateral surfaces of objects which are not planar. Alternatively or additionally to the cups, for example, there may be provided gripping members, such as sets of pincers, which always act on the sides of the article to be picked. The grip at the side of the objects allows the production of a picking apparatus which is virtually universal and in which adaptations of the gripping member to the overall dimensions of the various articles to be picked are not necessary.

According to a particularly advantageous aspect, the picking apparatus may comprise a transfer platform on which there is positioned in a supporting manner each article which is gripped laterally by the gripping member. The transfer platform may be movable with respect to the vehicle so as to extend together with the gripping member towards the article to be picked and to subsequently transfer the article, which is positioned in a supporting manner thereon, from the storage area which is external with respect to the vehicle to a predetermined position in the receiving zone on-board the vehicle itself. According to a more advantageous aspect, the gripping member and the movable transfer platform are movable with respect to each other so as to transfer the article from the support position on the platform to the predetermined position in the receiving zone on-board the vehicle.

According to a particularly advantageous aspect, the gripping member and the transfer platform can be carried by two different arms which are movable in a coordinated manner with respect to each other. In particular, the movable arms can be mounted on the vehicle so as to be able to extend in a coordinated manner towards the storage area which is external with respect to the vehicle in such a manner that the first upper arm can grip an article, for example, via the assembly of suction cups, and transfer it to the transfer platform or support plane on the other arm and under the first arm. The two arms can then be retracted in a synchronized manner so that the weight of the article is supported by the lower arm while the upper arm, via the gripping member, keeps the article stable on the transfer platform. Once the predetermined position in the receiving zone on-board the vehicle has been reached, the upper arm can move the article from the transfer platform and position it in the position assigned for the purpose on the vehicle. The provision of two arms one above the other enables control in terms of height of the lateral gripping position of the article by the gripping member with respect to the base of the article which is intended to be supported on the transfer platform. In this manner, it is possible to adapt the relative gripping height of the article in accordance with the height thereof or the configuration of the surface of the side thereof which does not therefore all necessarily have to be planar.

As mentioned above, the commissioning vehicle may comprise a recognition apparatus which is provided to recognize a compartment which is arranged along the route of the vehicle and to be positioned in a precise manner in the region of a show portion of the compartment. Preferably, the recognition apparatus is provided to recognize a storage support and/or stored articles on a storage support. For this purpose, the recognition apparatus may comprise a vision and/or scanning device, such as, for example, one or more cameras and/or a scanner for bar codes, QR codes, RFID tags or other similar identification systems of the generally known type. Advantageously, the vision and/or scanning device may define one or more positioning references on the compartment and transmit the information items to a vehicle guiding system, which may be provided to manoeuvre in front of the show portion of the compartment in accordance with positioning signals which are processed on the basis of the data received from the vision and/or scanning device.

According to another aspect, the picking apparatus may be mounted on a structure which is selectively movable in a lateral direction with respect to the movement direction of the vehicle along a lane. The picking apparatus can be configured to move into selective support against a show zone of a compartment facing along this lane. In this manner, it is possible to obtain a precise spatial reference, including of the mechanical type, for the article picking operations by the commissioning vehicle.

According to a different aspect, it is possible to ensure in the commissioning vehicle that the receiving zone is surrounded at three sides by barriers, walls, grids or other protection systems which prevent the articles which are stored on the commissioning support of the pallet type from falling out of the vehicle, particularly during the positioning manoeuvre on-board the vehicle of an article which is transported by the picking apparatus.

According to another aspect, the commissioning vehicle may comprise an autonomous guiding system which is controlled by guiding instructions which are stored on the commissioning vehicle and/or which are transmitted from a remote control system. The autonomous guiding system may be integrated in the guide by an operator who can replace the automatic guiding of the vehicle, for example, for transporting the pallet which is definitively loaded outside the store for the subsequent packing operations.

According to another aspect, there is provided in the commissioning system an artificial intelligence software item (AIS) which is capable of defining the priorities between the various software components for optimized control of the macro-functions which sends to these control software components the indications necessary for carrying out the correct actions in a prioritized manner in accordance with the overall objectives of generally optimization of the commissioning system.

The commissioning system of the present invention is particularly advantageous with respect to the systems of the prior art in that it is not necessary to move the storage support of the pallet type in order to move it into a picking area of the articles. In particular, the storage support with the articles to be stored can be moved only once in the event of the despatch thereof to the store, when it is moved and received in the compartment assigned to it.

Advantageously, the path of the commissioning vehicle for reaching the various picking locations can be curvilinear or linear or mixed without the limitations of the systems of the prior art which provide for rollers, belts, transporters, chutes and other systems of the type.

Advantageously, in the commissioning system of the present invention there can be used simultaneously a large number of commissioning vehicles which can operate in a parallel manner in order to increase the productivity overall. The control system may advantageously be programmed to guide the fleet of vehicles so as to minimize the occurrences of interference and to optimize the movements.

The possibility of picking the articles directly from the storage pallets and supporting them directly on the commissioning pallets on the vehicle is particularly advantageous with respect to the prior art without it being necessary to have any other type of intermediate transfer, such as, for example, conveyers, lifts or portal robots, rollers or other means which are known in the sector.

### Brief description of the drawings

Additional features and advantages will be appreciated from the following detailed description of a preferred embodiment with reference to the appended drawings which are given by way of non-limiting example and in which:
- Figure 1 is a schematic, perspective view of a first example of a direct picking system, without any intermediate transfer type, for articles from storage supports of the pallet type on commissioning supports of the pallet type on-board a commissioning vehicle, incorporating aspects of the present invention;
- Figure 2 is a schematic, perspective view, drawn to an enlarged scale, of a portion of the direct picking apparatus which is mounted on the vehicle which is illustrated in Figure 1;
- Figure 3 is a schematic side view of a second example of a direct picking system incorporating aspects of the present invention, in a configuration for picking an article from a pallet;
- Figure 4 is a schematic side view similar to Figure 3, in which the picking system is in a configuration for retrieving the article on-board the commissioning vehicle;
- Figure 5 is a schematic plan view of the picking system in the configuration of Figure 4, during the picking of an article with greater dimensions; and
- Figure 6 is a schematic plan view of the picking system of Figure 5 in an additional configuration for positioning the article with greater dimensions on-board the commissioning vehicle.

### Detailed description

In the exemplary embodiment which follows, there are described features which allow the invention to be carried out. The features described can be combined with each other in various manners and are not necessarily limited to the precise embodiment to which the drawings and the relevant description refer. In other words, a person skilled in the art of the sector who reads the following description will know how to obtain the information items which are advantageous in order to know the method for carrying out one or more of the features described by combining it with one or more of the other features described without the particular formulation of the description, paragraphs, phrases or drawings constituting a limitation on the possibility of isolating one or more of the features described and illustrated in order to combine them with one or more of any of the other features described and illustrated. In greater detail, in the present description any combination of any two features which are expressly described must be understood to be expressly described even if the features are extracted individually from the specific context in which they may be beside or combined with other different features, taking account of the competences and knowledge of a person skilled in the art in the sector who understands the possibility of functionally combining the features without it being necessary to functionally apply the other different features. Unless otherwise specified, each and any element, member, means, system, component, object which is described and illustrated in the present description has to be understood to be individually described and autonomously able to be modified and able to be separated from and/or combined with each and any other element, member, means, system, component, object which is described and illustrated. The materials, forms and functions which are described and illustrated do not limit the present invention but instead are only set out in order to allow a person skilled in the art to understand and carry out the invention according to preferred though non-exclusive embodiments.

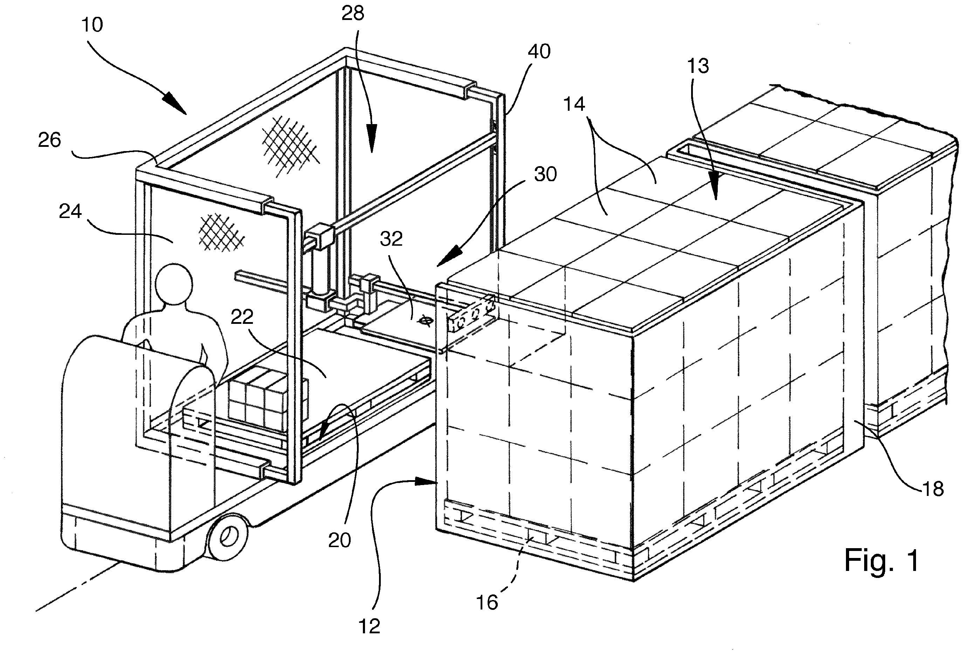

Now with reference to Figure 1, a commissioning system, that is to say, a system for picking and collecting articles in accordance with an order or commission, comprises one or more lanes which can be travelled by at least one commissioning vehicle 10. Various compartments face each other along the lanes, in particular housings or compartments 12 for receiving articles 14, for example, boxes, cases or packs, which are piled in piles or stacks 13 on storage supports 16 of the pallet type. The pallets which carry the stored articles can be the same ones which are delivered by the suppliers and which are positioned in the compartments 12 in known manner, for example, by transporting them into the respective compartments which are designated by means of lifting trucks. The compartments 12 face each other at the front on the lane while there is preferably provided, at the rear and at the sides thereof, a protection barrier 18 which is formed, for example, by a grid, a grille or by actual walls. The protection barrier 18 retains the articles 14, preventing them from overturning or falling sideways during picking, as will be set out more clearly below. The protection barrier 18 is fixed to the ground and/or to a scaffold which forms the structure of the compartments 12 and which extends along the lane. Preferably, the commissioning system comprises a plurality of lanes which are configured and connected in various manners, for example, an assembly of lanes which are mutually parallel and which are flanked at both sides by the compartments 12 and which are accessible as a result of paths or passages which are transverse thereto. However, it is not excluded that it may be possible to carry out configurations with different lanes, for example, in a ray-like manner and/or with paths on several levels, which are joined by ramps and/or lifts, in accordance with methods and configurations which are known in the field of stores for articles.

The front opening of the compartments 12 is preferably slightly more extensive than the width of a standard pallet which is 1200 mm for a European pallet. If any or all of the compartments 12 were to be intended to each receive more than one pallet, for example, two or three pallets, the front opening of these compartments 12 would preferably be slightly greater than a corresponding multiple of the width of a standard pallet. If they are intended to receive a single pallet, for example, the front opening of the compartments 12 can be, in a non-limiting manner, between approximately 1250 and 1500 mm, but naturally it may also be different, for example, of approximately 800 mm. The selection of the extent of the front opening of the compartments 12 in any case depends on the specific configuration of the system, the space for manoeuvring available for the lifting trucks or other means which have to position the pallets in the compartments, and on the type and dimensions of the articles which are stacked on the pallets. Each compartment 12 is individually identified in the control system of the store via a unique compartment code, for example, with reference to a bar code which is positioned in a front zone of the compartment 12 and which can be read by the vehicle 10. Naturally, the bar code can be replaced by any other system which allows detection of the unique code of the compartment, for example, QR code readers, RFID tag readers, proximity sensors with a unique ID, a camera and with any other method or equipment which is functionally similar. Below, for the sake of simplicity, the example of the bar code will continue to be used without this excluding the possibility of using any other similar means for defining the unique code.

The commissioning vehicle 10 may be an autonomously guided vehicle, for example, guided on the lanes by a known system, such as an induction wire or by a laser guide. Alternatively, the vehicle 10 may be - as shown in Figure 1 - a vehicle driven by a driver. The system may comprise both vehicles 10 which are all of the same type, with autonomous or manual guiding, and a combination thereof. The motorization and the guiding system of the vehicles 10 is of the type which is generally known in automation solutions of stores and will not be further described below.

Each commissioning vehicle 10 comprises a loading plane 20 which can receive a pallet 22 with standard measurements, for example, a European pallet of 800 x 1200 mm. In any case, it is not excluded that the commissioning vehicle may be configured to receive two or more pallets. The pallet 22 may be both of conventional type and of the "roll" type.

As will be described in greater detail below, the pallet 22 is loaded on the loading plane 20 preferably automatically, by picking it from a store of empty pallets, both manually and automatically or semi-automatically, for example, using a transporter for the purpose of loading and unloading the pallet or roll. The loading plane 20 is surrounded at three sides by a protection 24 which is formed, for example, by a grid or a grille or, less preferably, by solid panels. The protection 24 retains the articles loaded on the pallet 22 by preventing them from overturning or falling from the vehicle 10 during the positioning thereof on the pallet 22 and during the transport thereof, particularly during the acceleration and braking operations of the vehicle 10. The protection 24 is preferably mounted on a scaffolding 26 which is fixed to the structure of the vehicle 10. The zone of the vehicle 10 which is delimited by the loading plane 20 in the lower region and which extends vertically as far as the upper limit of the scaffolding 26 or the protection 24 approximately defines the loading zone 28 of the vehicle 10.

The scaffolding 26 supports an article picking system which is configured to pick, preferably one at a time, the desired articles 14 from the stacks 13 which are supported on the pallets 16 which are arranged in the compartments 12 in order to position them, preferably in accordance with an optimized arrangement, in the loading zone 28 of the vehicle 10 so as to form a localized and transported stack of articles, which is substantially already ready to be wrapped in a plastics film for the subsequent transport to the destination.

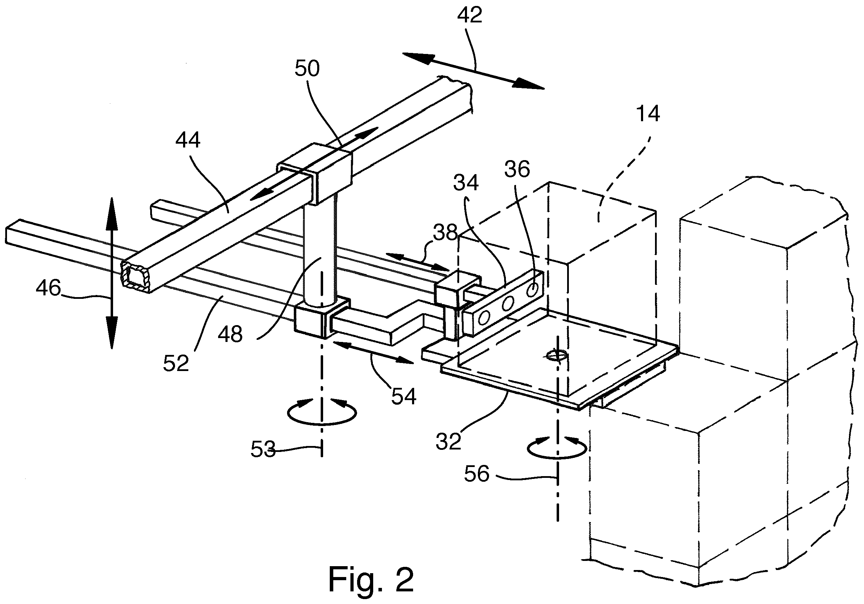

A first example of an article picking system 30 which can be seen in a state drawn to an enlarged scale in Figure 2 preferably comprises a support plate 32 which is capable, via an articulated system, of approaching a specific article 14 in the stack 13 of the compartment 12. A movement member 34, for example, provided with an assembly of suction cups 36, is provided to draw the article 14 on the support plate 32. Preferably, the movement member 34 is slidingly movable in a direction parallel with the plane of the support plate 12, as indicated by the arrow 38 in Figure 2. Similarly, the support plate 32 is capable of being brought inside the loading zone 28 of the vehicle 10, by approaching the location where the movement member 32 can unload the product 14 by urging it off the support plate 32.

The picking system 30 comprises a movable frame 40 (Figure 1) which is mounted on the scaffolding 26 so as to be able to move laterally with respect to the vehicle 10 so as to reach, by being supported thereon, the peripheral edge of the compartment 12, from which to pick the article or articles 14 desired. On-board the vehicle 10, particularly but in a non-limiting manner on the movable frame 40, there is mounted a bar code reader or camera or other functionally similar instrument which is capable of reading the bar code or similar system which identifies the compartment 12 and recognizes the pallet 16 of articles 14 which is positioned therein. In Figure 2, the lateral movement of the movable frame 40 is indicated by the arrow 42. There is mounted on the movable frame 40 a structure which is generally movable in a vertical plane and which is transverse with respect to the direction of lateral movement 42 of the movable frame 40. In the exemplary embodiment of the Figures, this structure comprises a movable cross-member 44 which is mounted, for example, on the vertical uprights of the movable frame 40 and which can slide in the vertical direction 46 by means of known systems, for example, by sliding on linear guides, and which can be actuated, for example, by means of belts which are controlled by electric motors or other systems which are known in industrial automation systems. There is mounted on the movable cross-member 44 a support 48, for example, a vertical bar, which can slide in the horizontal direction 50 which is orthogonal to the movement direction 42 of the movable frame 40. The support 48 may also be actuated in any known manner, for example, also by means of a toothed belt actuation which is controlled by an electric motor. The support 48 holds a movable arm 52, which is preferably slidable in a horizontal direction 54, and which is also rotatable about a vertical axis 53. There is fixed to the movable arm 52 the support plate 32 which is provided with a general capacity for rotation about a vertical axis 56 with respect to the movable arm 52. There is also slidingly mounted on the movable arm 52 the movement member 34 which is movable in a direction 38 which is also preferably parallel with the movement direction of the movable frame 40 and the movable arm 52. In a variant which is not illustrated, the picking system 30 could be separated from the vehicle 10 and be loaded separately therefrom where necessary.

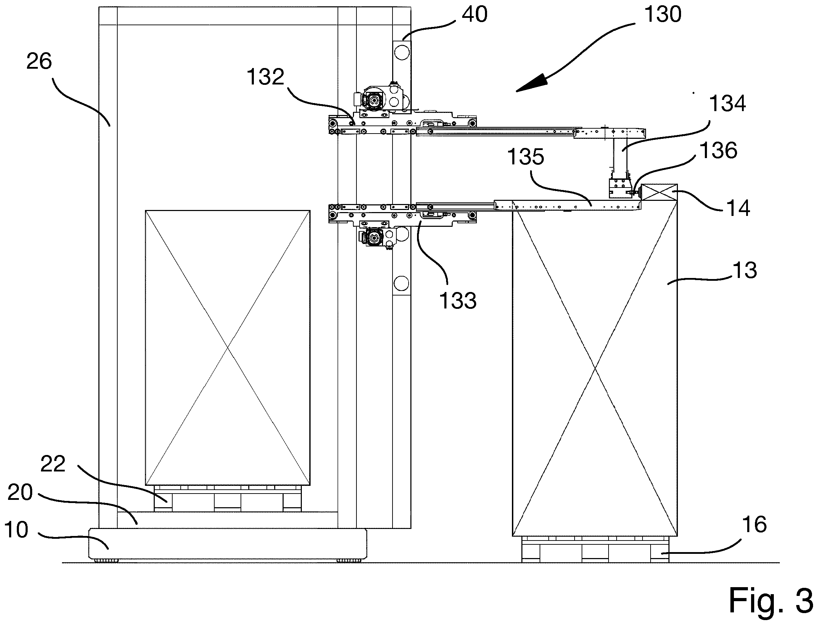

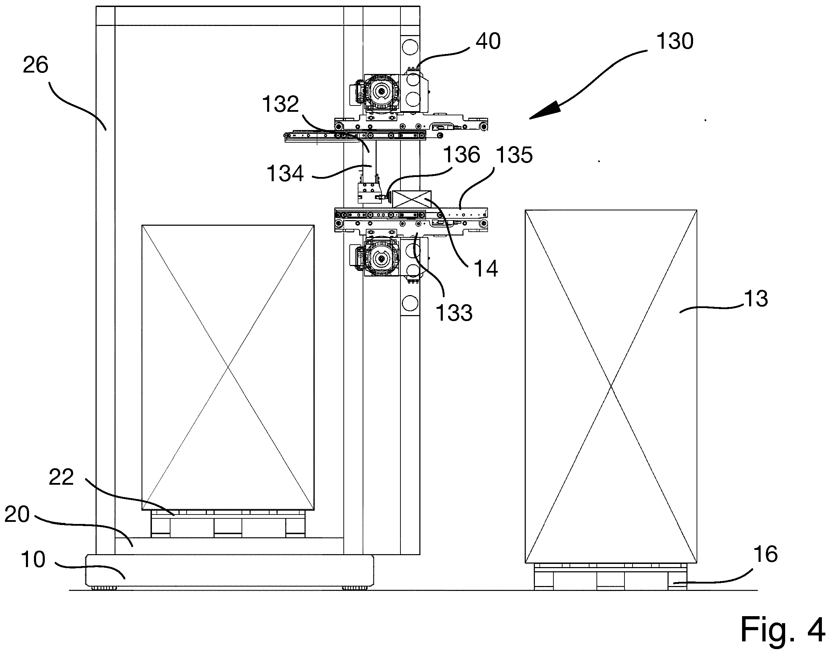

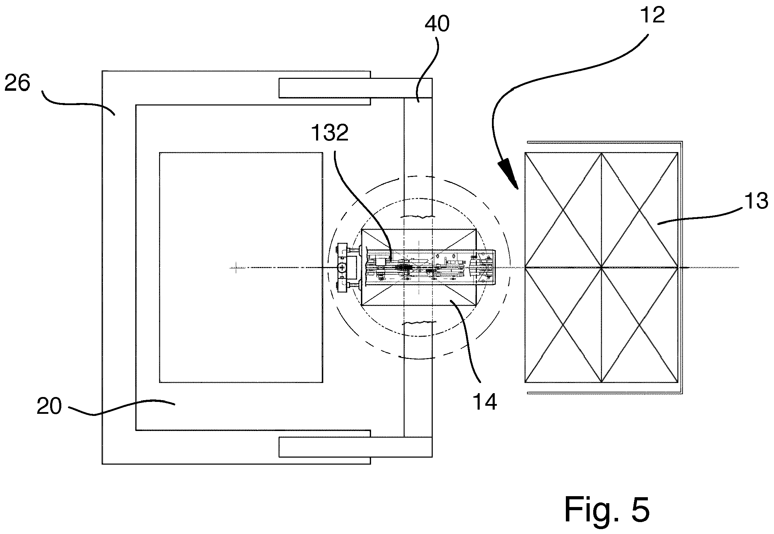

A second exemplary embodiment of an article picking system 130 which can be seen in Figures 3 to 5 comprises a first implement 132 and a second implement 133 which are mounted on the movable frame 40 of the scaffolding 26 and which are coordinated with each other. The movable frame 40 has the same functionalities and characteristics indicated above with reference to the exemplary embodiment of a picking system 30 of Figures 1 and 2.

The first implement 132 is able to move with respect to three axes X, Y and Z in addition to a rotation with respect to a vertical axis. Furthermore, the first implement 132 provides for activating the suction of an assembly of suction cups 136, which are carried by a movement member 134. The first implement 132 is provided to extend towards the stack 13 of the compartment 12, extending with respect to the movable frame 40 as a result of linear guides or other systems of the type. The first implement 132 is therefore capable of gripping an article 14 from the stack 13 of the compartment 12 via the movement member 134, which can draw the article 14 onto a support or transport plate 135 which is mounted on a second implement 133. The support plate 135 is mounted on linear guides 136 or another system which allows the support plate to approach a specific article 14 in the stack 13 of the compartment 12. In this manner, the support or transport plate 135 can reach the most remote location of the stack 13 of the compartment 12. The second implement 133 is also capable of moving with respect to three axes X, Y and Z in a coordinated manner with the first implement 132. The movements of the first implement 132 and the second implement 133 substantially reproduce the movement functionalities already described with reference to the exemplary embodiment of Figures 1 and 2 for the same purposes. For example, both implements 132, 133 can move vertically on the movable frame 40 or in any case with respect to the scaffolding 26, in order to reach the desired height at which the article 14 to be picked is located in the stack 13 in the compartment 12, and in order to deposit the article 14 on the stack in a formation on the pallet 22 on-board the vehicle 10.

The control of the picking system, including the movement of the vehicles 10, the identification of the products 14 to be picked for each order and the optimization of the load on the vehicles 10 is controlled by a data-processing system which can provide a central node, for example, a server or a cluster of servers, on which a general control programme is being carried out and which interfaces both with the control system via which the orders are introduced for the suppliers and the orders of the clients are processed. Each vehicle 10 can further have an individual control system which deals both with all the activities relating to the guiding and the propulsion of the vehicle 10 and with the control, identification, picking and transport operations of the articles from the various compartments 12 for the composition of the stack to be sent, once it has been finished, to the known operations of film-wrapping, labelling and despatch.

The pallets which arrive from a supplier and which are charged with homogeneous articles 14 are controlled and identified. An operator provides, for example, with a lifting truck, for carrying each pallet 16 into a respective destination compartment 12. The compartment 12 may be predetermined by the control system which, for example, assigns a predetermined compartment to the pallet being introduced beforehand, or may be selected autonomously by the operator who in this case reads the bar code of the pallet and the compartment in order to associate them on the control system. Before the pallet is definitively put in position, the operator provides for eliminating the covering which wraps round the products 14 which are stacked on the pallet 16. Preferably, the covering is collected in a pulping basket which is loaded on the lifting truck. The pallets which are charged with products from the suppliers are thereby positioned along the lanes, with the side which is 1200 mm long facing the lane, and therefore with a depth of 800 mm in the compartment, if the standard European pallet is considered. Therefore, the system will comprise one or more lanes which are flanked at the sides by a specific number of compartments 12, in which the pallets are arranged, in a state more or less full of articles in accordance with how many of them have already been picked. When a pallet in a compartment is empty, it is extracted and the compartment becomes available for inserting a new full pallet of articles from a supplier.

The picking of articles in order to form an optimized consignment pallet corresponding to an order or at least a portion thereof is carried out via the vehicles 10. An empty vehicle 10 is initially brought, with manual or automatic guiding depending on the type of vehicle, in the region of a station for storing empty pallets. As indicated above, these loading pallets could be both of the conventional type and of the "roll" type. There is automatically or manually charged in the vehicle 10, and particularly in the loading plane 20, an empty pallet 22 from the side of the loading zone 28 which is laterally open, for example, at the left-hand side as illustrated in Figure 1. As indicated above, the position of the vehicle 10 is guided by the induction wire in the floor or by the laser guide or by another similar guide system. The position of the vehicle 10 can be identified in any case via position sensors, for example, laser type position sensors, in the case of both manual guiding and automatic guiding. The empty pallet 22 can advantageously be loaded on the loading plane 20, for example, by means of conveyors or by means of a group of movable forks which are able to transfer the pallet 22 on-board the vehicle 10 without it being necessary to provide a belt or chain type transport system on-board the vehicle 10.

The vehicle 10 on which the empty pallet 22 has been loaded can be directed by the control software of the orders towards the different compartments 12 in which there are present the articles 14 to be positioned on the pallet 22 in order to form the stack of articles to be despatched. The control software is programmed so as to organize as well as possible the stack of articles, by selecting the loading sequence of the articles which is most convenient and stable, for example, so as to position the largest and strongest packs on the bottom and the smallest and lightest packs above them. The control software can take account both of the dimensions and the weight of the articles and of the characteristics of stackability, which are determined, for example, by the shape thereof. In definitive terms, the control software is programmed with a "best fitting" function for the articles of the order so as to define a priori the composition of the pallet on the vehicle 10 and the consequent quantity. The control software may also determine what is the optimum path for the vehicle 10 in the store lanes on the basis, for example, of the vehicle traffic, the shortest route to follow, the availability of identical products in different compartments, and so on.

The vehicle 10 is therefore directed to the first picking destination corresponding to the compartment 12 in which the articles 14 to be positioned first on the empty pallet 22 are stored. The vehicle 10 which arrives in the first position from which to pick the articles is positioned in a precise manner in the region of the opening of the picking compartment 12, for example, by using laser position sensors or similar systems for defining in a precise manner the position along the lane which corresponds to the compartment 12. In this position, the movable frame 40 extends laterally in the direction 42 and is positioned in abutment with the opening of the compartment 12. Preferably, the protection 24 which is mounted on the vehicle 10 extends laterally so as to generate a zone which is completely delimited and surrounded by walls and in which the article picking system 30 can operate in safety.

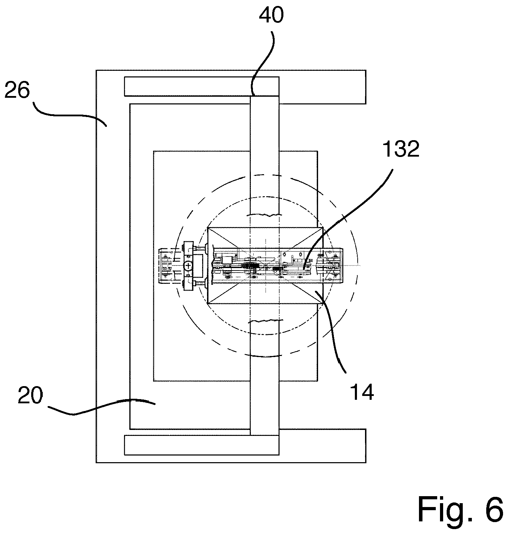

A vision system, for example, a camera which is mounted on-board the vehicle 10, can detect the front of the pallet in section so as to define the correct gripping locations for the picking, particularly defining the articles which are positioned highest in the stack 13 of articles 14 in the compartment 12. Once the article 14 to be picked has been identified, the picking system is actuated so as to approach the support plate 32, in the first exemplary embodiment of Figures 1 and 2, or 135 in the second exemplary embodiment of Figures 3 to 6, at the lower end of the article to be picked so that the movement member 34 or 134 can approach the side of the article 14 until securely gripping it by means of the suction cups 36 or 136 being activated. The movement member 34 or 134 is then retracted so as to draw the article 14 on the support plate 32, as illustrated with broken lines in Figure 2, or on the support plate 135 of the second implement 133, as illustrated in Figure 3.

From this position, in the solution of Figures 1 and 2, the movable arm 52 is rotated about the axis 53 and simultaneously the movable frame 40 is caused to retract. When the movable arm 52 has reached a position which is determined and programmable with respect to the loading zone 28, the suction cups can release the article 14 and the support plate 32 underneath may where applicable rotate about the axis 56, for example, by 90°, in accordance with the required "best fitting" composition of this article on the pallet 22. By means of the various movement axes of the article picking system 30, the support plate 32 is brought to the desired loading location for the article 14. At this location, the movement member 32 can be actuated by urging the article outside the support plate 32 while the movable arm 52 is gradually withdrawn until being completely released, leaving the article 14 in a state supported on the pallet 22 or on the other articles previously loaded on the vehicle 10.

In the solution of Figures 3 to 6, the operations of the picking system 130 are substantially similar to the operations of the solution previously described with reference to Figures 1 and 2. These operations are generally carried out by the two implements 132, 133 with movements which are coordinated with each other, which reproduce the movements described above in relation to the picking system 30. The picking system with two implements allows, in addition to the picking system with a single implement, the adjustment of the vertical distance between the two implements 132, 133 which are mounted to be movable in a vertical direction with movement independently of each other. In this manner, it is also possible to adjust, in accordance with the article to be picked, the distance between the movement member 134 of the first implement 132, which carries the assembly of suction cups 136, and the support plate 135 of the second implement 133, on which the suction cups 136 draw initially and subsequently retain the article to be transported on-board the vehicle 10.

The vehicle 10 is then directed by the control system towards the other compartments 12 which are determined in the picking sequence so as to complete the loading on the pallet 22. Naturally, it is always possible for a predetermined article which cannot be picked, as a result of shape, dimensions or weight, from the article picking system 30, to be able to be loaded manually on the vehicle 10 by an operator. However, this eventuality does not reduce the efficiency of the system of the present invention if the number of articles which can be controlled automatically by the article picking system 30 is prevalent.

Once picking is complete, the unloading of the pallet 22 which is loaded with articles 14 is carried out in known manner, for example, by means of forks, which position the pallet 22 in an area which is intended for wrapping with a film before the subsequent steps of labelling and despatch.

The control system can be programmed in order to simulate activity cycles which are temporally defined, for example, daily, and which comply with a specific number of orders. In this manner, it is possible to determine beforehand, for example, the number of commissioning vehicles to be used during each activity cycle on the basis of the articles stored to be picked and the times for the movement and the stopping of the commissioning vehicles. Where a manual intervention is provided and necessary for loading a number of articles, the simulation also allows provision of the number of implements necessary for completing the hypothesized orders.

The control and management system can advantageously make use of artificial intelligence techniques which are suitable for the particular nature of the operations to be carried out with the vehicles 10 and the picking systems which are mounted on-board. In this regard, the system may provide for using different basic software components which perform the following macro-functions:
WES ("warehouse execution system"): relates to a software component which manages the strategies of allocation of the articles in accordance with elements of the registry database of articles;
SNAV ("system navigation management") : relates to a software component which manages the fleet of vehicles 10 in order to ensure the best possible routes thereof in order to reach the article required to be picked from the relevant stack 13 in an identified compartment 12;

- BFS ("best fitting management"): is a software component which manages the best position of the product on the pallet or roll which is mounted on-board the vehicle;
- VIS ("system vision management"): is a software component which manages the vision system in order to ensure the correct positioning of the axes of the implements which are mounted on the vehicle 10 in the picking step of an article from a stack 13 of a compartment 12;
- MMS ("machine movements management"): is a software component which is capable of controlling all the movement axes of the individual vehicle 10;
- MNAV ("machine navigation management"): is a software component which is capable of managing the autonomous movement of the individual vehicle on programmable routes which are defined by the mapping of the area.

Among the software components set out above, the first three (WES, SNAV and BFS) have variable characteristics as a function of the objectives desired and individual methodologies for optimization which may be in conflict with each other. In particular, the component BFS could indicate to the component WES movements for optimizing the pallet which is mounted on-board the vehicle so as to make the overall system unproductive. In the same manner, WES could indicate unproductive movements to the SNAV. Furthermore, the SNAV could decide that it is advantageous to move into positions which contradict the optimizations decided by the BFS and consequently, in turn, also contradicts WES. In general, therefore, none of the three software items set out above can have a unique and non-variable decision-making priority in relation to the activities to be carried out.

The problems set out above and in general all the decision-making situations involving possible conflict between the control software items are solved by using an artificial intelligence software component (AIS) which is capable of defining the priorities. In particular, the artificial intelligence software component is provided to send to the control software components set out above, and particularly to the WES, SNAV and BFS components, the indications necessary for carrying out the correct actions in a prioritized manner in accordance with the overall objectives which it is desirable to obtain.

These software components, particularly WES, SNAV and BFS components, act according to their algorithms in order to guide the control software items of each individual machine (VIS, MMS, MNAV), in any case maintaining the processing, control and safety aspects which distinguish them.

The AIS system, knowing the final objectives, that is to say, the despatch orders, and the alternatives possible which each individual software component communicates to it, is able to process the data by defining the selection with the best compromise.

It is necessary to note that the processing times of these algorithms have to be very fast and therefore to adapt in real time to the evolution of the real situation within the commissioning system.

The software component AIS intervenes in the control of the exceptions or the misunderstandings which can be generated in the commissioning system, such as, for example, a missing article, a damaged article, etc., so as to direct the control software components towards the best selection possible at this specific time.

The system AIS is provided with an operator interface, where the selections brought about by the artificial intelligence are shown to a user in a comprehensible manner and the reasons according to agreed parameters. In this manner, the operator over time may influence the selections of the commissioning system and contribute to improving it.

The picking systems described above have many qualities and advantages with respect to the systems of the prior art, including the significant possibility of working at the visible lateral front of the pallet which is placed in the compartment 12, unlike other systems of the prior art which, by picking the articles from the various pallets from above, require a specific empty space above them, reducing the storage density.

Another advantage is the fact of picking the articles following the minimum transfer path of the products from the pallet which is positioned in the compartment 12 to the pallet on-board the vehicle. This allows a substantial reduction in the transfer times for the products, to the advantage of the productivity of the commissioning system.

Another advantage is the fact that, by means of the picking systems described, in particular by means of the picking system 130 with two implements, it is possible to rotate the article in order to position it on the pallet on-board the vehicle without the article leaving the transport plane and without any distance under the support or transport plate. The manoeuvring space necessary for transferring the products from the stack 13 in the compartment 12 to the pallet on the vehicle 10 is thereby minimized. Having less manoeuvring spatial requirement also means being able to make the passage lanes of the vehicles 10 more compact, while allowing the simultaneous passage of two vehicles in the same lane and the operational ability thereof on pallets which are arranged at opposite sides of the lane. This is all reflected in a greater density of storage. In the preferred embodiments, it is also possible to cross the paths of the vehicles in lanes with a width of only 3300 mm.

The provision of a support or transport plate allows adequate support for the articles of various types and kinds from below, including with shapes which are irregular at the top or at the side, such as, for example, packs of bottles of beverages.

The structure of the picking system described above is advantageous in that it does not use a manipulator robot as occurs instead in the prior art. In this manner, it is possible to effectively use the reduced space between the pallet beside the lane and the pallet carried on-board the vehicle, using the movement equipment which is mounted on the vehicle which can be moved towards the centre of this reduced space. Furthermore, it is not necessary to provide empty spaces above the pallet beside the lane because the articles are picked at the side, unlike the prior art where the manipulator robot picks the articles from above and therefore needs a manoeuvring space above the stack of articles.

In the version of the picking system which uses two implements, as illustrated by way of example in Figures 3 to 6, it is further possible to substantially reduce the spatial requirement of the equipment under the support plane, which can therefore be lowered substantially in order to approach the ground so as to also allow the articles of the lowest stack layer to be readily picked, which articles are supported directly on the pallet which can therefore be supported directly on the ground. Furthermore, the picking solution with two implements allows height adjustment of the location for picking the article by the movement member of the first implement with respect to the support plane of the second implement because the two implements are movable in a vertical direction independently of each other. This allows advantageous use of the article picking system also having very different heights from each other and adjustment of the picking location of the movement member in order to position it in the most suitable zone for picking, for example, in the case of articles with a shaped or irregular lateral surface.

Naturally, the principle of the invention remaining the same, the forms of embodiment and details of construction may be varied widely with respect to those described and illustrated, without thereby departing from the scope of the present invention.

## Claims

1. A commissioning system for picking articles from storage supports of the pallet type and organizing them on a commissioning support, comprising
- a plurality of compartments which are distributed beside at least one lane and which comprise a show portion on the lane, each compartment being provided in order to receive a respective storage support of the pallet type for stored articles,
- at least one commissioning vehicle which is provided to transport at least one commissioning support of the pallet type, the commissioning vehicle being provided with an article picking apparatus which is configured to selectively take one or more articles which are stored on the storage supports from the show portion of one or more compartments of the plurality of compartments,
wherein the commissioning vehicle is configured to move along the at least one lane and to stop in the region of compartments which are selected in order to pick from the storage supports, via the article picking apparatus, a selection of articles in accordance with an order and to position on the commissioning support the articles which are picked in this manner in order to form an ordered and stacked grouping.

2. A commissioning system according to claim 1, wherein the commissioning vehicle is provided with a recognition apparatus for the show portion on the lane in order to be positioned in a precise manner in the region of the show portion on the lane of each compartment, from which to pick the selection of articles, and wherein the recognition apparatus preferably comprises a vision and/or scanning device in order to define one or more positioning references on the compartment, the vehicle manoeuvring in front of the show portion on the lane of the compartment in accordance with positioning signals which are processed on the basis of the data received from the vision and/or scanning device.

3. A commissioning system according to claim 1, wherein the storage supports of the pallet type all have at least one standard uniform dimension, the show portion of the compartments on the lane having a predetermined and uniform show width which is slightly greater than the standard uniform dimension of the storage supports of the pallet type or a multiple thereof.

4. A commissioning system according to any one of the preceding claims, wherein each compartment is provided, along the portion of the perimeter thereof which does not define the show portion on the lane, with barriers which prevent the stored articles from falling from the storage support thereof.

5. A commissioning system according to any one of the preceding claims, comprising a storage area for commissioning supports of the pallet type, an automatic loading apparatus being provided to selectively load one of these commissioning supports from the storage area for supports on a commissioning vehicle.

6. A commissioning system according to any one of the preceding claims, comprising a plurality of lanes, towards which the plurality of compartments face, the lanes being able to be travelled by a plurality of commissioning vehicles which circulate simultaneously, each commissioning vehicle being provided to autonomously pick a corresponding selection of articles in accordance with a corresponding order, a control system which is implemented on a computer being programmed to coordinate the movements of the commissioning vehicles along the lanes and optimizing the respective stopping thereof in the region of the compartments in which the stored articles to be picked in an orderly manner are received, and wherein preferably the control system implemented on a computer is programmed to simulate temporally defined activity cycles, for example, daily cycles, which fulfil a specific number of orders so as to determine beforehand the number of commissioning vehicles to be used during each activity cycle on the basis of the stored articles to be picked and the times for the movement and the stopping of the commissioning vehicles, and wherein preferably the control system implemented on a computer comprises a plurality of control software components, each one provided for controlling a commissioning macro-function and being contained in the group comprising at least:
- one software component for managing the allocation of the articles (WES),
- one software component for managing the routes of the fleet of commissioning vehicles (SNAV), and
- one software component which manages the positioning of the articles on the commissioning support of the pallet type which is transported by the commissioning vehicle (BFS),
further comprising an artificial intelligence software component (AIS) which is provided for interacting with the control software components and for sending the indications thereof for carrying out actions as a priority from one or the other control software component in accordance with the predetermined overall commissioning objectives.

7. A commissioning vehicle which can be used in a commissioning system according to any one of the preceding claims, comprising:
- a receiving zone with a support base for at least one commissioning support of the pallet type,
- an article picking apparatus which is configured to selectively pick sequentially a plurality of articles from storage supports of the pallet type which are arranged externally with respect to the vehicle and to position them in an ordered manner in the receiving zone on-board the vehicle,
wherein the picking apparatus comprises a gripping member which is configured to take each article laterally.

8. A commissioning vehicle according to claim 7, wherein the article picking apparatus comprises at least one articulated arm which is provided at the end thereof with the gripping member, preferably comprising an assembly of suction cups.

9. A commissioning vehicle according to claim 7 or 8, wherein the article picking apparatus comprises a transfer platform on which there is positioned in a supporting manner each article which is gripped laterally by the gripping member, the transfer platform being movable in order to transfer the article which is positioned in a supporting manner thereon, from a storage area which is outside the vehicle to a predetermined position in the receiving zone on-board the commissioning vehicle, and wherein preferably the gripping member and the movable transfer platform are movable with respect to each other in order to transfer the article from the support position on the platform to the predetermined position in the receiving zone on-board the commissioning vehicle.

10. A commissioning vehicle according to claim 8 and claim 9, wherein the gripping member and the transfer platform are carried by two separate and movable arms which are coordinated with each other, respectively.

11. A commissioning vehicle according to any one of claims 7 to 10, comprising a recognition apparatus which is provided to recognize a compartment which is arranged along the route of the vehicle, and to be positioned in a precise manner in the region of a show portion of the compartment, and wherein preferably the recognition apparatus is provided to recognize a storage support and/or stored articles on a storage support.

12. A commissioning vehicle according to claim 11, wherein the recognition apparatus comprises a vision and/or scanning device for defining one or more positioning references on the compartment, a guide system for the commissioning vehicle being provided to manoeuvre in front of the show portion of the compartment in accordance with positioning signals which are processed on the basis of the data which are received from the vision and/or scanning device.

13. A commissioning vehicle according to any one of claims 7 to 12, wherein the picking apparatus is mounted on a structure which is selectively movable in a lateral direction with respect to the movement direction of the vehicle along a lane, and which is configured to move into selective support against a show zone of a compartment which faces along the lane.

14. A commissioning vehicle according to any one of claims 7 to 13, wherein the receiving zone is surrounded at three sides by barriers which prevent the articles which are stored on the commissioning support of the pallet type from falling.

15. A commissioning vehicle according to any one of claims 7 to 14, comprising an autonomous guiding system which is controlled by guiding instructions which are stored on the commissioning vehicle and/or which are transmitted from a remote control system.
